# EUROPEAN PATENT SPECIFICATION

(11) **EP 4 474 046 B1**
(45) Date of publication and mention of the grant of the patent: **24.12.2025**
(21) Application number: 24020095.6
(22) Date of filing: 28.03.2024
(51) Int. Cl.: C25B 11/065, C25B 11/089, C25B 1/04, C25B 11/054, C25B 11/091, B01J 23/83, B01J 23/00, B01J 37/03, B01J 37/08

(54) **THE METHODOLOGY OF PREPARING AN ELECTRODE MATERIAL FOR THE APPLICATION IN HER/OER REACTIONS**
METHODOLOGIE ZUR HERSTELLUNG EINES ELEKTRODENMATERIALS ZUR ANWENDUNG IN HER/OER-REAKTIONEN
METHODOLOGIE DE PREPARATION D'UN MATERIAU D'ELECTRODE POUR APPLICATION DANS DES REACTIONS HER/OER

(30) Priority: 29.03.2023 PL 44424123
(43) Date of publication of application: 11.12.2024
(73) Proprietor: Uniwersytet Mikolaja Kopernika w Toruniu, 87-100 Torun (PL); Politechnika Gdanska, 80-233 Gdansk (PL)
(72) Inventor: Lukaszewicz, Jerzy P., 87-100 Torun (PL); Ilnicka, Anna, 87-100 Torun (PL); Skorupska, Malgorzata, 06-420 Golymin-Osrodek (PL); Grabowska, Patrycja, 88-400 Znin (PL); Szkoda, Mariusz, 83-330 Pepowo (PL)

(56) References cited:
- US-A1- 2021 046 453
- BU YUNFEI ET AL: "Synergistic interaction of perovskite oxides and N-doped graphene in versatile electrocatalyst", JOURNAL OF MATERIALS CHEMISTRY A, vol. 7, no. 5, 1 January 2019 (2019-01-01), GB, pages 2048 - 2054, XP093218477, ISSN: 2050-7488, DOI: 10.1039/C8TA09919G
- KIM NAM-IN ET AL: "Highly active and durable nitrogen doped-reduced graphene oxide/double perovskite bifunctional hybrid catalysts", JOURNAL OF MATERIALS CHEMISTRY A, vol. 5, no. 25, 1 January 2017 (2017-01-01), GB, pages 13019 - 13031, XP093218456, ISSN: 2050-7488, DOI: 10.1039/C7TA02283B
- QIN YONG ET AL: "Crosslinking Graphene Oxide into Robust 3D Porous N-Doped Graphene", ADVANCED MATERIALS, vol. 27, no. 35, 6 August 2015 (2015-08-06), DE, pages 5171 - 5175, XP093218487, ISSN: 0935-9648, DOI: 10.1002/adma.201501735

## Description

The subject of the invention is a method of preparing an electrode material for application in HER/OER reactions.

Electrocatalytic splitting of water is regarded as a promising and, at the same time, most eco-friendly technology of producing pure hydrogen. According to the current state of knowledge, noble metals, their alloys and oxides are the best catalysts for water splitting. So far, precious platinum (Pt) and its alloys have been the most efficient electrocatalysts of hydrogen evolution in the HER reaction, and a IrO₂ and RuO₂ have been reported as effectively performing catalysts in oxygen evolution reactions in OER reactions. Unfortunately, shortage and relatively low electrochemical stability of noble metals oxides impair the range of their applicability. Moreover, due to economic and environmental issues, catalysts based on noble metals require advanced and costly recycling. For this reason, it is necessary to develop electrocatalysts free from noble metals which would be characterized by an excellent bifunctional catalyst efficiency, both in hydrogen evolution reaction and oxygen evolution reaction. The fact that catalysts applied in the water splitting reaction should be characterized by high electrical conductivity, well-developed surface area, and stability is also crucial, and hence, carbon materials doped with nitrogen are considered as good catalytic materials.

Hybrid materials composed of graphene foams containing nitrogen atoms and a perovskite-type oxide have never been prepared for their future concurrent employment in HER and OER. In the state-of-the-art descriptions concerning a combined use of hybrid materials of that kind in HER and OER reactions, no literature reports have been found. Therefore, the aim of the proposed solution is to develop a cost-efficient method of a combined application of the perovskite-type oxide containing praseodymium, barium, strontium, cobalt, and iron atoms as well as graphene foams doped with nitrogen heteroatoms as a catalyst in hydrogen and oxygen evolution reactions in its composition. Such an idea of the electrode material is aimed at a simultaneous and synergic employment of the catalytic properties of the perovskite-type oxide in the HER and OER as well as high electrical conductivity of the carbon material additionally stimulated by the introduction of nitrogen atoms to the carbon matrix (chemical embedding of heteroatoms). Moreover, the carbon matrix acts as an in-situ crystallization matrix of the perovskite-type oxide during its synthesis from the selected raw materials. The presence of the carbon substrate and the porous structure formed inside cause the growing perovskite-type oxide crystallites to be of nanometer sizes.

In the prior art one may find documents concerning hybrid electrocatalyst materials. In "Synergistic interaction of perovskite oxides and N-doped graphene in versatile electrocatalyst" (Bu Yunfei et al, Journal of Materials Chemistry A, vol 7, no. 5, p. 2048-2054, DOI:10.1039/c8ta09919g) the preparation of Ba_{0.5}Sr_{0.5}Co_{0.8}Fe_{0.2}O_{3-δ} (BSCF) and LnBa_{0.5}Sr_{0.5}Co_{1.5}Fe_{0.5}O_{5+δ} (LBSCF, Ln = Nd, Sm, and Gd) perovskite catalysts supported on N-doped reduced graphene oxide for the OER reaction is disclosed. The method comprises one-step exfoliation and nitrogen doping of graphene oxide (GO) by the hydrothermal reaction. In "Highly active and durable nitrogen doped-reduced graphene oxide/double perovskite bifunctional hybrid catalysts" (Kim Nam-In et al, Journal of Materials Chemistry A, vol. 5, no 25, p. 13019-13031, DOI:10.1039/c7ta02283b) an electrocatalyst comprising perovskite (PrBa_{0.5}Sr_{0.5})_{0.9}5Co_{1.5}Fe_{0.5}O_{5+δ} and N-doped graphene composite for OER/HER is described. There is no disclosure as to how the perovskite and the hybrid catalyst is prepared.

US 2021/046453 A1 discloses perovskite Ba_{0.5}Sr_{0.5}Co_{0.8}Fe_{0.2}O_{3-δ}/carbon composite electrode for HER/OER prepared by the solid-state synthesis method.

The aim of the invention is the combined application of the perovskite-type oxide as the catalyst in both the hydrogen evolution reaction (HER) and the oxygen evolution reaction (OER). The prepared catalyst contains praseodymium, barium, strontium, cobalt and iron atoms as well as graphene foams doped with nitrogen in its composition. The invention constitutes the methodology of the hybrid catalyst preparation resulting from the thermal conversion of the appropriately selected reactants. The thermal conversion process is used to produce a carbon substrate and to convert the appropriate raw materials into the nanostructured perovskite-type oxide. No literature-based solutions involving the employment of green sea algae, a pore-forming agent, and commercially available graphene nano flakes have provided a description of using the prepared high-nitrogen graphene foams as a medium for the formation of the perovskite-type oxide throughout the whole mass and distributed throughout the whole volume.

The subject of the invention is the methodology of preparing the electrode material for the application in the HER/OER reactions characterized in that praseodymium(III) nitrate in the amount from 0.08 g to 0.10 g, barium nitrate in the amount from 0.025 g to 0.035 g, strontium nitrate in the amount from 0.015 g to 0.025 g, cobalt(II) nitrate in the amount from 0.085 g to 0.095 g and iron(III) nitrate in the amount from 0.025 g to 0.035 g are mixed and the complexing agent is added in the amount from 20 cm³ to 30 cm³ and mixed preferably with a magnetic stirrer, and next an ammonia solution is added in the amount from 0.4 to 0.6 cm³ preferably 0.5 cm³ preferably until the pH is from 5.9 to 6.1 most preferably 6 and graphene foams are added in the amount 0.1 g to 0.6 g, and after heating under the neutral gas atmosphere in the form of nitrogen or argon and cooling to room temperature an inorganic acid is added to the thus prepared mass in the ratio from 5 to 7 cm³ per 0.5 g of the prepared mass and left in a magnetic stirrer for 10 to 60 min preferably 30 min, and after that it is rinsed with distilled water until the pH of the leachate is neutral, dried, mixed, transferred to a glass or porcelain container, pre-heated at the temperature from 200°C to 300°C preferably at 250°C in the time from 2 to 10 h preferably 5 h under the neutral gas atmosphere in the form of nitrogen or argon and next heated at the temperature from 700°C to 1200°C preferably at 900°C, whereby the complexing agent is composed of ethylenediaminetetraacetic acid (EDTA) in the amount from 0.25 to 0.35 g, citric acid in the amount from 0.30 g do 0.40 g and water preferably distilled water in the amount from 20 cm³ to 30 cm³.

Graphene foams are prepared by mixing powdered sea algae in the amount from 0.2 g to 1.2 g, nano flakes of graphene in the amount from 0.2 g to 1.2 g and potassium carbonate in the amount from 2 g to 12 g in water preferably distilled water in the amount from 20 to 30 cm³, and placing in an electrical laboratory dryer and drying at the temperature from 90°C to 130°C preferably at 110°C for 10 to 48 h preferably 24 h, and next performing the carbonization process at the temperature from 600°C to 1200°C preferably at 800°C at the heating rate from 5°C/min to 20°C/min preferably 10°C/min and heating for 30 to 120 min preferably 60 min. Preferably the neutral gas in the form of nitrogen is of 5.0 purity. Drying is performed in an electric laboratory dryer preferably for 20 to 48 h most preferably 24 h, preferably at the temperature from 90°C to 140°C most preferably at 110°C. Preferably mixing is performed at room temperature for 3 to 10 h preferably 6 h. Preferably the ammonia solution is at the concentration from 15 to 30% preferably 25%. Preferably the mass is cooled to the temperature from 15 to 30°C preferably 20°C. Preferably the inorganic acid is HCl preferably at the concentration from 35 to 38%.

The invention is based on a combined application of a porous and electroconductive carbon matrix in the form of a graphene foam with a high nitrogen content and the nanostructured perovskite-type oxide containing praseodymium, barium, strontium, cobalt, and iron atoms as the anode and/or cathode in its composition which can be used in the water electrolysis process in an aqueous H₂SO₄ or KOH electrolyte solution environment. The porous matrix for the introduction of the perovskite-type oxide containing praseodymium, barium, strontium, cobalt, and iron atoms is prepared from green sea algae by their carbonization at the temperature range from 600°C to 1200°C for the period of time from 30 min to 120 min with the use of a solid template removed with the use of mineral acids. The synthesis of the perovskite-type oxide containing praseodymium, barium, strontium, cobalt, and iron atoms in its composition occurs in situ during the formation of the carbon matrix preferably at the temperature range from 700°C to 1200°C for the period of time from 5 to 24 h. The porous carbon matrix is enriched with nitrogen. At the same time, the production of a conductive matrix, porous and rich in nitrogen, as well as the nanostructured perovskite-type oxide containing praseodymium, barium, strontium, cobalt, and iron atoms in its composition contributes to the occurrence of the synergic effect in the scope of HER and OER based on attaining low overpotential at the current density of -10 mA/cm² and 10 mA/cm², respectively.

The new approach combines the elements whose synergic activity contributes to the appearance of beneficial catalytic properties. The application of a porous carbon matrix for the formation of the perovskite-type oxide crystallites is also a novelty. The thus prepared catalyst is a bifunctional material capable of catalyzing both HER as well as OER reactions.

The present invention is aimed at solving the problem of noble metals elimination from catalysts applied in the water splitting reaction. The effect of the combined application of the perovskite-type oxide and graphene foams does not occur separately analyzing their individual catalytic properties because using pure carbon doped with heteroatoms results in lack of catalytic centers originating from the oxide present in the mass and on the surface. The subject of the invention has been presented on the examples of preparation.

The subject of the invention has been revealed on the examples of preparation not restricting its range of protection, which is defined by the appended claims.

### Example I.

0.09 g of praseodymium(III) nitrate, 0.03 g of barium nitrate, 0.02 g of strontium nitrate, 0.09 g of cobalt(II) nitrate and 0.03 g of iron(III) nitrate were placed in a beaker. Next, a solution prepared by mixing 0.30 g of ethylenediaminetetraacetic acid (EDTA) and 0.34 g of citric acid in 20 cm³ of distilled water was added to the solid mixture. An ammonia solution in the amount of 0.5 cm³ is added to the thus prepared solution to prepare a solution of the pH=6. In the next step, graphene foams are added in the amount of 0.13 g. Graphene foams preparation is performed by mixing 0.24 g of powdered sea algae, 0.24 g of graphene nano flakes, and 2.64 g of potassium carbonate, respectively, in 24 cm³ of distilled water, then placing in an electrical laboratory dryer at the temperature of 110°C for 24 h to evaporate water, and then performing the process of carbonization at the temperature of 800°C, at the heating rate of 10°C/ min and heating at the set temperature for 1 h. Potassium carbonate is removed from the prepared mass after heating under the neutral gas atmosphere (nitrogen of 5.0 purity (99,999%)) with the use of an inorganic acid by applying 6 ml of an inorganic acid per 0.5 g of carbon, leaving in a magnetic stirrer for 30 minutes, and then rinsing with distilled water until the pH of the leachate is neutral and drying in an electric laboratory dryer for 24 h at the temperature of 110°C. Next, the whole mixture containing reactants appropriate for the oxide formation together with graphene foams was mixed for 6 h at room temperature. The prepared mass was transferred to a porcelain combustion boat. In the next step, the mixture was pre-heated at the temperature of 250°C for 5 h under the neutral gas atmosphere, and then at 900°C for another 5 h.
Following the described procedure, a hybrid material containing the perovskite-type oxide containing praseodymium, barium, strontium, cobalt, and iron atoms in its composition, distributed evenly in the graphene foam matrix, was prepared.

### Example II.

0.09 g of praseodymium(III) nitrate, 0.03 g of barium nitrate, 0.02 g of strontium nitrate, 0.09 g of cobalt(II) nitrate and 0.03 g of iron(III) nitrate were placed in a beaker. Next, a solution prepared by mixing 0.30 g of ethylenediaminetetraacetic acid (EDTA) and 0.34 g of citric acid in 20 cm³ of distilled water was added to the solid mixture. An ammonia solution in the amount of 0.5 cm³ is added to the thus prepared solution to prepare a solution of the pH=6. In the next step, graphene foams are added in the amount of 0.52 g. Graphene foams preparation is performed by mixing 1 g of powdered sea algae, 1 g of graphene nano flakes, and 11 g of potassium carbonate, respectively, in 24 cm³ of distilled water, then placing in an electrical laboratory dryer at the temperature of 110°C for 24 h to evaporate water, and then performing the process of carbonization at the temperature of 800°C, at the heating rate of 10°C/ min and heating at the set temperature for 1 h. Potassium carbonate is removed from the prepared mass after heating under the neutral gas atmosphere (nitrogen of 5.0 purity (99,999%)) with the use of an inorganic acid by applying 6 ml of an inorganic acid per 0.5 g of carbon, leaving in a magnetic stirrer for 30 minutes, and then rinsing with distilled water until the pH of the leachate is neutral and drying in an electric laboratory dryer for 24 h at the temperature of 110°C. Next, the whole mixture containing reactants appropriate for the oxide formation together with graphene foams was mixed for 6 h at room temperature. The prepared mass was transferred to a porcelain combustion boat. In the next step, the mixture was pre-heated at the temperature of 250°C for 5 h under the neutral gas atmosphere, and then at 1000°C for another 5 h.

Following the described procedure, a hybrid material containing the perovskite-type oxide containing praseodymium, barium, strontium, cobalt, and iron atoms in its composition, distributed evenly in the graphene foam matrix, was prepared.

### Example III.

The methodology of preparing the electrode material for the application in the HER/OER reactions is based on mixing praseodymium(III) nitrate in the amount of 0.08 g, barium nitrate in the amount of 0.025 g, strontium nitrate in the amount of 0.015 g, cobalt(II) nitrate in the amount of 0.085 g, and iron(III) nitrate in the amount of 0.025 g, adding the complexing agent in the amount of 20 cm³, and mixing with a magnetic stirrer. The complexing agent is composed of ethylenediaminetetraacetic acid (EDTA) in the amount of 0.25 g, citric acid in the amount of 0.30 g, and distilled water in the amount of 20 cm³. Next, an ammonia solution is added in the amount of 0.4 cm³, and then graphene foams are added in the amount of 0.1 g. Graphene foams are prepared by mixing powdered sea algae in the amount of 0.2 g, graphene nano flakes in the amount of 0.2 g, and potassium carbonate in the amount of 2 g in distilled water in the amount of 20 cm³. Next, they are placed in an electrical laboratory dryer at the temperature of 90°C for 10 h and then the process of carbonization is performed at the temperature of 600°C, at the heating rate of 5°C/ min, and they are heated for 30 min preferably.

After heating under the neutral gas atmosphere and cooling, an inorganic acid is added to the thus prepared mass in the ratio of 5 cm³ per 0.5 g of the prepared mass, and it is left in a magnetic stirrer for 10 min, and after that it is rinsed with distilled water until the pH of the leachate is neutral. The product is dried, mixed, transferred to a glass container, pre-heated at the temperature of 200°C for 2 h under the neutral gas atmosphere (argon), and heated at the temperature of 700°C.

### Example IV.

The methodology of preparing the electrode material for the application in the HER/OER reactions is based on mixing praseodymium(III) nitrate in the amount of 0.10 g, barium nitrate in the amount of 0.035 g, strontium nitrate in the amount of 0.025 g, cobalt(II) nitrate in the amount of 0.095 g, and iron(III) nitrate in the amount of 0.035 g, adding the complexing agent in the amount of 30 cm³, and mixing with a magnetic stirrer. Subsequently, an ammonia solution is added in the amount of 0.6 cm³, and graphene foams are added in the amount of 0.6 g. Graphene foams are prepared by mixing powdered sea algae in the amount of 1.2 g, graphene nano flakes in the amount of 1.2 g, and potassium carbonate in the amount of 12 g in distilled water in the amount of 30 cm³. Next, they are placed in an electrical laboratory dryer and dried at the temperature of 130°C for 48 h and then the process of carbonization is performed at the temperature of 1000°C, at the heating rate of 20°C/ min, and they are heated for 120 min.

After heating under the neutral gas atmosphere and cooling, an inorganic acid is added to the thus prepared mass in the ratio of 7 cm³ per 0.5 g of the prepared mass, and it is left in a magnetic stirrer for 60 min, and after that it is rinsed with distilled water until the pH of the leachate is neutral. The product is dried, transferred to a porcelain container, mixed, and pre-heated at the temperature of 300°C for 10 h under the neutral gas atmosphere, and heated at the temperature of 1200°C. The complexing agent is composed of ethylenediaminetetraacetic acid (EDTA) in the amount of 0.35 g, citric acid in the amount of 0.40 g, and distilled water in the amount of 30 cm³ .

### Example V.

The methodology of preparing the electrode material for the application in the HER/OER reactions is based on mixing praseodymium(III) nitrate in the amount of 0.9 g, barium nitrate in the amount of 0.03 g, strontium nitrate in the amount of 0.02 g, cobalt(II) nitrate in the amount of 0.09 g, and iron(III) nitrate in the amount of 0.03 g, adding the complexing agent in the amount of 30 cm³, and mixing with a magnetic stirrer. The complexing agent is composed of ethylenediaminetetraacetic acid (EDTA) in the amount of 0.3 g, citric acid in the amount of 0.35 g, and distilled water in the amount of 30 cm³. Subsequently, an ammonia solution is added in the amount of 0.5 cm³ until the pH=6, and graphene foams are added in the amount of 0.3 g. Graphene foams are prepared by mixing powdered sea algae in the amount of 0.75 g, graphene nano flakes in the amount of 0.65 g, and potassium carbonate in the amount of 6 g in distilled water in the amount of 25 cm³. Next, they are placed in an electrical laboratory dryer and dried at the temperature of 110°C for 24 h and then the process of carbonization is performed at the temperature of 800°C, at the heating rate of 10°C/ min, and they are finally heated for 60 min. After heating under the neutral gas atmosphere and cooling, an inorganic acid is added to the thus prepared mass in the ratio of 6 cm³ per 0.5 g of the prepared mass, and it is left in a magnetic stirrer for 30 min, and after that it is rinsed with distilled water until the pH of the leachate is neutral. The product is dried, mixed, transferred to a porcelain container, and pre-heated at the temperature of 250°C for 5 h under the neutral gas atmosphere, and heated at the temperature of 900°C. The neutral gas is nitrogen of 5.0 purity. Drying is performed in an electric laboratory dryer at the temperature of 110°C for 24 h. In other examples of application drying is performed at every temperature range, in the period of time from 20 to 48 h, at the temperature from 90°C to 140°C. Mixing is performed at room temperature for 6 h. In other examples mixing is performed in the period from 3 to 10 h. The ammonia solution is at the concentration of 25%. In other examples the solution at the concentration range from 15% to 30%. The mass is cooled to the temperature of 20°C. In other examples the mass is cooled at every temperature range from 15 to 30°C. The inorganic acid is HCl preferably at the concentration of 35%. In other examples HCl is at the concentration range from 35 to 38%.

## Claims

1. The methodology of preparing the electrode material for the application in the HER/OER reactions **characterized in that** praseodymium(III) nitrate in the amount from 0.08 g to 0.10 g, barium nitrate in the amount from 0.025 g to 0.035 g, strontium nitrate in the amount from 0.015 g to 0.025 g, cobalt(II) nitrate in the amount from 0.085 g to 0.095 g and iron(III) nitrate in the amount from 0.025 g to 0.035 g are mixed and the complexing agent is added in the amount from 20 cm³ to 30 cm³ and mixed with a magnetic stirrer, and next an ammonia solution is added in the amount from 0.4 to 0.6 cm³ preferably 0.5 cm³ preferably until the pH is from 5.9 to 6.1 most preferably 6 and graphene foams are added in the amount 0.1 g to 0.6 g, and after heating under the neutral gas atmosphere in the form of nitrogen or argon and cooling an inorganic acid is added to the thus prepared mass in the ratio from 5 to 7 cm³ per 0.5 g of the prepared mass and left in a magnetic stirrer for 10 to 60 min preferably 30 min, and after that it is rinsed with distilled water until the pH of the leachate is neutral, dried, mixed, transferred to a glass or porcelain container, pre-heated at the temperature from 200°C to 300°C preferably at 250°C in the time from 2 to 10 h preferably 5 h under the neutral gas atmosphere in the form of nitrogen or argon and next heated at the temperature from 700°C to 1200°C preferably at 900°C, whereby the complexing agent is composed of ethylenediaminetetraacetic acid (EDTA) in the amount from 0.25 to 0.35 g, citric acid in the amount from 0.30 g do 0.40 g and water preferably distilled water in the amount from 20 cm³ to 30 cm³ and graphene foams are prepared by mixing powdered sea algae in the amount from 0.2 g to 1.2 g, nano flakes of graphene in the amount from 0.2 g to 1.2 g and potassium carbonate in the amount from 2 g to 12 g in water preferably distilled water in the amount from 20 to 30 cm³, and then placing in an electrical laboratory dryer and drying at the temperature from 90°C to 130°C preferably at 110°C for 10 to 48 h preferably 24 h, and next performing the carbonization process at the temperature from 600°C to 1200°C preferably at 800°C at the heating rate from 5°C/min to 20°C/min preferably 10°C/min and heating for 30 to 120 min preferably 60 min.

2. Methodology according to claim 1 **characterized in that** the neutral gas in the form of nitrogen is of 5.0 purity.

3. Methodology according to claim 1 or 2 **characterized in that** drying is performed in an electric dryer, preferably in the period of time from 20 to 48 h, most preferably for 24 h, preferably at the temperature range from 90°C to 140°C, most preferably at 110°C.

4. Methodology according to claim 1, 2, or 3 **characterized in that** mixing is performed at room temperature in the period of time from 3 to 10 h, preferably for 6 h.

5. Methodology according to claim 1, 2, 3, or 4 **characterized in that** the ammonias solution is at the concentration range from 15 to 30%, preferably 25%.

6. Methodology according to claim 1, 2, 3, 4, or 5 **characterized in that** the mass is cooled to the temperature range from 15 to 30°C, preferably 20°C.

7. Methodology according to claim 1, 2, 3, 4, 5, or 6 **characterized in that** the inorganic acid is HCl, preferably at the concentration range from 35 to 38%.

## Patentansprüche

1. Verfahren zur Gewinnung von Elektrodenmaterial zur Anwendung bei Reaktionen vom Typ HER/OER, **dadurch gekennzeichnet, dass** Praseodym(III)-nitrat in einer Menge von 0,08 g bis 0,10 g, Bariumnitrat in einer Menge von 0,025 g bis 0,035 g, Strontiumnitrat in einer Menge von 0,015 g bis 0,025 g, Cobalt(II)-nitrat in einer Menge von 0,085 g bis 0,095 g und Eisen(III)-nitrat in einer Menge von 0,025 g bis 0,035 g, gemischt werden und eine Komplexbildner-Lösung in einer Menge von 20 cm3 bis 30 cm3 hinzugefügt wird, und mit einem Magnetrührer gemischt wird, und anschließend eine Ammoniaklösung in einer Menge von 0,4 bis 0,6 cm3, vorzugsweise 0,5 cm3, vorzugsweise bis ein pH-Wert von 5,9 bis 6,1, am günstigsten 6, erreicht wird, hinzugefügt wird, und Graphenschäume in einer Menge von 0,1 g bis 0,6 g hinzugefügt wird, und zu der auf diese Weise erhaltenen Masse, nach dem Durchwärmen in der Atmosphäre eines Inertgases in Form von Stickstoff oder Argon und dem Abkühlen, anorganische Säure in einem Verhältnis von 5 bis 7 cm3 pro 0,5 g gewonnener Masse hinzugefügt wird, auf dem Magnetrührer während einer Dauer von 10 bis 60 min, vorzugsweise 30 Minuten belassen wird, wonach diese mit destilliertem Wasser abgewaschen wird, bis ein neutraler pH-Wert des Sickerwassers erreicht wird, diese getrocknet, gemischt und in ein Glas- oder Prozellangefäß übertragen wird, bei einer Temperatur von 200 °C bis 300 °C, vorzugsweise 250 °C, während einer Dauer von 2 bis 10 h, vorzugsweise 5 h, in der Atmosphäre eines Inertgases in Form von Stickstoff oder Argon vorgewärmt wird, und anschließend bei einer Temperatur von 700 °C bis 1 200 °C, vorzugsweise 900 °C, durchgewärmt wird, wobei die Komplexbildner-Lösung in ihrer Zusammensetzung Ethylendiamintetraessigsäure (EDTA) in einer Menge von 0,25 bis 0,35 g, Citronensäure in einer Menge von 0,30 g bis 0,40 g und Wasser, vorzugsweise destilliertes Wasser, in einer Menge von 20 bis 30 cm3 enthalten sind, und die Graphenschäume durch die Mischung in Wasser, vorzugsweise destilliertem Wasser, in einer Menge von 20 bis 30 cm3, eines Pulvers aus Meeresalgen in einer Menge von 0,2 g bis 1,2 g, Graphen-Nanoplättchen in einer Menge von 0,2 g bis 1,2 g und Kaliumcarbonat in einer Menge von 2 g bis 12 g erhalten werden, anschließend erfolgt die Verlegung in einen Labortrockner und die Trocknung bei einer Temperatur von 90 °C bis 130 °C, vorzugsweise 110 °C, während einer Dauer von 10 bis 48 h, vorzugsweise 24 h, wonach dies dem Verfahren der Karbonisierung bei einer Temperatur von 600 °C bis 1 200 °C, vorzugsweise 800 °C, mit einer Erwärmungsgeschwindigkeit von 5 °C/min bis 20 °C/min, vorzugsweise 10 °C/min, unterzogen wird und während einer Dauer von 30 bis 120 min, vorzugsweise 60 min, durchgewärmt wird.

2. Das Verfahren nach Anspruch 1, **dadurch gekennzeichnet, dass** das Inertgas Stickstoff mit einer Reinheit von 5,0 ist.

3. Das Verfahren nach Anspruch 1 oder 2, **dadurch gekennzeichnet, dass** das Trocknen in einem elektrischen Trockner durchgeführt wird, vorzugsweise während einer Dauer von 20 bis 48 h, am günstigsten 24 h, vorzugsweise bei einer Temperatur von 90 °C bis 140 °C, am günstigsten bei einer Temperatur von 110 °C.

4. Das Verfahren nach Anspruch 1, 2 oder 3, **dadurch gekennzeichnet, dass** das Mischen bei Raumtemperatur während einer Dauer von 3 bis 10 h, vorzugsweise 6 h, durchgeführt wird.

5. Das Verfahren nach Anspruch 1, 2, 3 oder 4, **dadurch gekennzeichnet, dass** die Ammoniaklösung eine Konzentration von 15 bis 30 %, vorzugsweise 25 %, hat.

6. Das Verfahren nach Anspruch 1, 2, 3, 4 oder 5, **dadurch gekennzeichnet, dass** die Masse auf eine Temperatur von 15 bis 30 °C, vorzugsweise 20 °C, abgekühlt wird.

7. Das Verfahren nach Anspruch 1, 2, 3, 4, 5 oder 6, **dadurch gekennzeichnet, dass** die anorganische Säure HCl ist, vorzugsweise mit einer Konzentration von 35 bis 38 %.

## Revendications

1. Le procédé d'obtention d'un matériau d'électrode destiné à être utilisé dans les réactions HER/OER, **caractérisé en ce que** le nitrate de praséodyme (III) en quantité comprise entre 0,08 g à 0,10 g, le nitrate de baryum en quantité comprise entre 0,025 g à 0,035 g, le nitrate de strontium en quantité comprise entre 0,015 g à 0,025 g, le nitrate de cobalt (II) en quantité comprise entre 0,085 g à 0,095 g et le nitrate de fer (III) en quantité comprise entre de 0,025 g à 0,035 g, sont mélangés et une solution complexante en quantité comprise entre 20 cm³ et 30 cm³ est ajoutée et mélangée sur un agitateur magnétique, puis une solution d'ammoniac en quantité comprise entre 0,4 et 0,6 cm³, de préférence 0,5 cm³, est ajoutée jusqu'à obtenir un pH compris entre 5,9 et 6,1, de préférence 6, et la mousse de graphène en quantité comprise entre 0,1 g et 0,6 g est ajoutée, et à la préparation ainsi obtenue, après chauffage dans une atmosphère de gaz inerte sous forme d'azote ou d'argon et refroidissement, on ajoute un acide inorganique en une proportion de 5 à 7 cm³ pour 0,5 g de préparation obtenue, on laisse sur un agitateur magnétique pendant 10 à 60 minutes, de préférence 30 minutes, puis on le lave à l'eau distillée jusqu'à obtention d'un pH neutre du liquide de sédimentation, on le sèche, on le mélange, on le transfère dans un récipient en verre ou en porcelaine, on le préchauffe à une température comprise entre 200 °C et 300 °C, de préférence à 250 °C, pendant 2 à 10 heures, de préférence 5 heures, dans une atmosphère de gaz inerte sous forme d'azote ou d'argon, puis on le chauffe à une température comprise entre 700 °C et 1 200 °C, de préférence 900 °C, la solution complexante ayant la composition suivante : acide éthylènediaminetétraacétique (EDTA) en quantité comprise entre 0,25 et 0,35 g, acide citrique en quantité comprise entre 0,30 g et 0,40 g et eau, de préférence distillée, en quantité comprise entre 20 et 30 cm³, les mousses de graphène étant obtenues en mélangeant dans de l'eau, de préférence distillée, en quantité comprise entre 20 et 30 cm³, de la poudre d'algues marines en quantité comprise entre 0,2 g et 1,2 g, de nanoparticules de graphène en quantité comprise entre 0,2 g et 1,2 g et de carbonate de potassium en quantité comprise entre 2 g et 12 g, puis on les place dans un séchoir de laboratoire et on les sèche à une température comprise entre 90 °C et 130 °C, de préférence 110 °C, pendant une durée comprise entre 10 et 48 heures, de préférence 24 heures, puis on les soumet à un processus de carbonisation à une température comprise entre 600 °C et 1 200 °C, de préférence 800 °C, à une vitesse de chauffage comprise entre 5 °C/min et 20 °C/min, de préférence 10 °C/min, et on les chauffe pendant une durée comprise entre 30 et 120 minutes, de préférence 60 minutes.

2. Le procédé selon la revendication 1 **caractérisé en ce que** le gaz inerte est de l'azote d'une pureté de 5,0.

3. Le procédé selon la revendication 1 ou 2 **caractérisé en ce que** le séchage est effectué dans un séchoir électrique, de préférence sur une période de 20 à 48 heures, de préférence 24 heures, de préférence à une température comprise entre 90 °C et 140 °C, de préférence 110 °C.

4. Le procédé selon la revendication 1, 2 ou 3 **caractérisé en ce que** le mélange est effectué à température ambiante pendant une période de 3 à 10 heures, de préférence 6 heures.

5. Le procédé selon la revendication 1, 2, 3 ou 4 **caractérisé en ce que** la solution d'ammoniaque a une concentration comprise entre 15 et 30 %, de préférence 25 %.

6. Le procédé selon la revendication 1, 2, 3, 4 ou 5 **caractérisé en ce que** la préparation est refroidie à une température comprise entre 15 et 30 C, de préférence 20 °C.

7. Le procédé selon la revendication 1, 2, 3, 4, 5 ou 6 **caractérisé en ce que** l'acide inorganique est du HCl, de préférence à une concentration comprise entre 35 et 38 %.
